(19) Europäisches Patentamt
European Patent Office
Office européen des brevets

(11) **EP 3 356 800 B1**

(12) **FASCICULE DE BREVET EUROPEEN**

(45) Date de publication et mention
de la délivrance du brevet:
**28.07.2021 Bulletin 2021/30**

(21) Numéro de dépôt: **16784807.6**

(22) Date de dépôt: **30.09.2016**

(51) Int Cl.:
*G01N 21/55* (2014.01)        *G01N 21/25* (2006.01)
*G01J 3/02* (2006.01)         *G01J 3/46* (2006.01)

(86) Numéro de dépôt international:
**PCT/EP2016/073466**

(87) Numéro de publication internationale:
**WO 2017/055580 (06.04.2017 Gazette 2017/14)**

(54) **PROCÉDÉ DE DÉTERMINATION DE LA RÉFLECTANCE D'UN OBJET ET DISPOSITIF ASSOCIÉ**

VERFAHREN ZUR BESTIMMUNG DER REFLEXION EINES OBJEKTS UND ZUGEHÖRIGE VORRICHTUNG

METHOD FOR DETERMINING THE REFLECTANCE OF AN OBJECT AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2015 FR 1559287**
**30.09.2015 FR 1559309**

(43) Date de publication de la demande:
**08.08.2018 Bulletin 2018/32**

(73) Titulaire: **Color Grail Research**
**92350 Le Plessis-Robinson (FR)**

(72) Inventeurs:
• **VAUCLIN, Rémi**
**95110 Sannois (FR)**
• **HENNEBELLE, Franck**
**92350 Le Plessis Robinson (FR)**

(74) Mandataire: **Lavoix**
**2, place d'Estienne d'Orves**
**75441 Paris Cedex 09 (FR)**

(56) Documents cités:
**EP-A2- 1 032 194    FR-A1- 2 821 671**
**FR-A1- 2 870 337    FR-A1- 2 987 120**

**Description**

La présente invention concerne un procédé de détermination de la réflectance d'un objet et un dispositif de détermination de la réflectance d'un objet.

Le document WO 2013/120956 A1 décrit un procédé de mesure de la réflectance diffuse uniforme en au moins un point d'un objet à l'aide d'un dispositif comportant un moyen apte à émettre des illuminants de couleur exprimés sous la forme de flux lumineux et un capteur électronique d'images couleurs et un dispositif comportant un moyen apte à émettre des illuminants de couleur sous la forme de flux lumineux de couleurs et un capteur électronique d'images couleurs, de mesure de la réflectance diffuse uniforme en au moins un point d'un objet placé dans une zone se trouvant dans le champ d'éclairement dudit moyen apte à émettre des couleurs et se trouvant dans le champ de vision dudit capteur électronique d'images couleurs et étant soumis à un illuminant extérieur sous la forme d'un flux lumineux extérieur environnant constant et inconnu.

Pour déterminer la réflectance d'un objet, il est connu d'utiliser des dispositifs spécialisés de haute précision comme des spectromètres à diffraction ou des spectromètres à double-photorécepteurs en parallèle.

Cependant, de tels dispositifs sont coûteux et difficiles à utiliser pour des opérateurs non spécialisés.

Il existe donc un besoin pour un procédé de détermination de la réflectance fiable et facile à mettre en œuvre.

Pour cela, la présente invention se rapporte à un procédé de détermination de la réflectance d'un objet selon la revendication 1.

Suivant des modes de réalisation particuliers, le procédé de détermination de la réflectance d'un objet comprend une ou plusieurs des caractéristiques des revendications 2 à 8, prise(s) isolément ou suivant toute combinaison techniquement possible.

La présente invention se rapporte à un dispositif de détermination de la réflectance d'un objet selon la revendication 9.

Suivant des modes de réalisation particuliers, le dispositif de détermination de la réflectance d'un objet comprend une ou plusieurs des caractéristiques des revendications 10 à 12, prise(s) isolément ou suivant toute combinaison techniquement possible.

Par ailleurs, il est décrit un procédé de détermination de la réflectance d'un objet, le procédé comprenant les étapes de :

- éclairement de l'objet par un illuminant extérieur présentant un éclairement inconnu et variable,
- émission d'au moins un flash de lumière éclairant l'objet, chaque flash de lumière étant émis par une source et présentant un éclairement connu dans une gamme de longueurs d'onde,
- collection de l'onde réfléchie par l'objet pour former au moins une image sur un capteur,
- obtention d'une équation à plusieurs inconnues, l'équation étant obtenue à partir des images formées, la réflectance de l'objet et l'éclairement de l'illuminant extérieur étant deux inconnues de l'équation,
- résolution de l'équation, l'étape de résolution de l'équation comprenant
- le calcul de points solution de l'équation,
- l'interpolation des points calculés par une fonction d'interpolation, et
- l'utilisation d'au moins une des approximations suivantes pour la résolution de l'équation :

  - une première approximation selon laquelle chaque image collectée lors d'un même flash de lumière est issue de l'émission d'un flash de lumière distinct,
  - une deuxième approximation selon laquelle la fonction d'interpolation détermine les points de stabilité de l'équation, et
  - une troisième approximation selon laquelle l'éclairement de l'illuminant extérieur à l'instant de l'émission d'un flash de lumière est égal à l'éclairement de l'illuminant extérieur à un instant précédent.

Un tel procédé de détermination de la réflectance p d'un objet est facile à mettre en oeuvre et permet d'obtenir une modélisation fiable de la réflectance p réelle de l'objet même avec un illuminant extérieur variable. Une telle mise en oeuvre permet de réduire le temps de calcul, tout en conservant la précision du procédé.

Suivant des modes de réalisation particuliers, le procédé de détermination de la réflectance d'un objet comprend une ou plusieurs des caractéristiques suivantes, prise(s) isolément ou suivant toute combinaison techniquement possible :

- la source et le capteur sont disposés sur un même appareil.
- une pluralité de flashs de lumière sont émis, chaque flash présentant un maximum d'éclairement en longueur d'onde, l'étape de collection étant mise en oeuvre pour chaque flash de lumière émis et au moins deux flashs de lumière présentent un maximum d'éclairement éloigné d'au moins 20 nanomètres.

- l'étape de collection est mise en œuvre plusieurs fois pour un même flash de lumière, l'équation obtenue étant un système d'équations surdéterminé, l'étape de résolution étant mise en œuvre pour une pluralité de systèmes d'équations déterminés en utilisant la première approximation pour obtenir une pluralité de fonctions de réflectance, le procédé comprenant, en outre, un calcul de la réflectance de l'objet en calculant une moyenne de la pluralité des fonctions de réflectance.

- la deuxième approximation est utilisée lors de l'étape de résolution de l'équation et dans lequel la fonction d'interpolation est une combinaison pondérée de fonctions de bases scellée par un nombre fini de points d'interpolation, notamment des splines cubiques, chaque point d'interpolation étant un point de stabilité de l'équation.
- une pluralité de flashs de lumière sont émis, chaque flash présentant un maximum d'éclairement en longueur d'onde, l'étape de collection étant mise en œuvre pour chaque flash de lumière émis. Les points d'interpolations vérifient au moins la propriété suivante : le nombre de point d'interpolation est égal au nombre de flashs.
- la troisième approximation est utilisée lors de l'étape de résolution de l'équation et le procédé comprend une étape de prise d'une image de référence par collection de l'onde réfléchie par l'objet pour former au moins une image sur un capteur en l'absence de flash émis par la source.
- l'étape de résolution de l'équation comprend une opération de soustraction d'une équation de référence pour obtenir une équation simplifiée, l'équation de référence étant obtenue à partir de l'image de référence.
- le procédé comporte, en outre, les étapes de :

    - estimation d'un intervalle de temps de variation de l'éclairement de l'illuminant extérieur,
    - à partir de l'intervalle de temps de variation estimé, détermination de la fréquence à laquelle l'étape de prise d'une image de référence est à réitérer pour que la troisième approximation reste valable

- le procédé est un procédé de mesure de la réflectance diffuse uniforme $\rho^{OBJ}(\lambda)$ en au moins un point d'un objet à l'aide d'un dispositif comportant un moyen apte émettre des illuminants de couleur exprimés sous la forme de flux lumineux et un capteur électronique d'images couleurs, caractérisé en ce qu'il comporte les étapes suivantes :

    • placement dudit objet dans une zone se trouvant dans le champ d'éclairement dudit moyen apte à émettre des illuminants de couleur sous la forme de flux lumineux de couleurs et se trouvant dans le champ de vision dudit capteur électronique d'images couleurs, ledit objet étant également soumis à un illuminant extérieur sous la forme d'un flux lumineux extérieur environnant $I^{ext}(\lambda)$ inconnu et constant où $\lambda$ désigne la longueur d'onde, émission par ledit moyen d'une série de N illuminants $S^{SOURCE}(\lambda)_i$ (avec N entier naturel supérieur à un, i variant de 1 à N et $\lambda$, la longueur d'onde), $S^{SOURCE}(\lambda)_i$ étant connu en fonction des paramètres d'entrée dudit moyen apte à émettre des flux lumineux de couleurs, capture par ledit capteur électronique d'images couleurs du flux lumineux réfléchi en au moins un point dudit objet et entrant dans le capteur, ledit flux lumineux étant noté $E^{capteur}(\lambda)_i$, avec N entier naturel strictement supérieur à deux, i variant de 1 à N et $\lambda$ la longueur d'onde, et obtention de N équations « $E_i$ »:

$$E^{capteur}(\lambda)_i = \rho^{OBJ}(\lambda) * (I^{ext}(\lambda) + S^{SOURCE}(\lambda)_i)$$

en raison du caractère additif de la lumière ondulatoire et par définition de la réflectance diffuse uniforme $\rho^{OBJ}(\lambda)$ en au moins un point de l'objet (30) ; et

    • détermination par ledit dispositif des deux fonctions inconnues continues $\rho^{OBJ}(\lambda)$ et $I^{ext}(\lambda)$ en résolvant le système des N équations $E_i$:

        - en intégrant chaque équation $E_i$ sur l'intersection des spectres source et capteur, en notant $b_j$ chaque sensibilité dans la base colorimétrique choisie, chaque équation $E_i$ générant alors un ensemble d'équations « $E_i$ intégrée » :

$$\int E^{capteur}(\lambda)_i * b_j(\lambda) * d\lambda = \int \rho^{OBJ}(\lambda) * \left(I^{ext}(\lambda) + S^{SOURCE}(\lambda)_i\right) * b_j(\lambda) * d\lambda$$

        - en calculant la valeur numérique correspondant au terme de gauche des équations $E_i$ intégrées à l'aide des paramètres de sortie du capteur numérique d'image ; et
        - en exprimant les deux fonctions inconnues continues $\rho^{OBJ}(\lambda)$ et $I^{ext}(\lambda)$ à l'aide d'un nombre fini de points d'interpolation $(\lambda_i, y_i)$ reliés par au moins une fonction d'interpolation $s(\lambda)$ pour conserver le caractère continu desdites fonctions inconnues continues $\rho^{OBJ}(\lambda)$ et $I^{ext}(\lambda)$, les $\lambda_i$ étant des longueurs d'onde choisies dans l'intersection des spectres source et capteur et étant des paramètres d'entrée du procédé, choisis pour minimiser le nombre de points d'interpolation à précision donnée ; et

- en recherchant les paramètres yi des fonctions $\rho^{OBJ}(\lambda)$ et $I^{ext}(\lambda)$ qui minimisent le système de moindres carrés $\|A * X - B\|_2$ résultant des équations $E_i$ intégrées.
- le procédé comporte en outre une étape de détermination de la valeur de l'illuminant extérieur $I^{ext}(\lambda)$.
- le procédé comporte en outre une étape de transcription de la fonction $\rho^{OBJ}(\lambda)$ de réflectance diffuse uniforme en au moins un point de l'objet en coordonnées CIE XYZ pour un illuminant donné.
- le nombre de flashs est du même ordre de grandeur que le nombre de points d'interpolation pour déterminer les valeurs de la réflectance diffuse uniforme $\rho^{OBJ}(\lambda)$ en au moins un point de l'objet et de l'illuminant extérieur $I^{ext}(\lambda)$.
- le procédé comporte une étape de détermination des valeurs de la réflectance diffuse uniforme $\rho^{OBJ}(\lambda)$ en au moins un point de l'objet et de l'illuminant extérieur $I^{ext}(\lambda)$ dans plusieurs bandes spectrales.
- le procédé est mis en œuvre pour réaliser des photographies spectrométriques d'objets et pour réaliser des adaptations chromatiques (balance des blancs) à volonté.
- le procédé est mis en œuvre pour mesurer la couleur d'un élément compris dans le groupe suivant : matériaux, solides, liquides, gaz, peintures, tapisseries, graphismes, textiles, plastiques, bois, métaux, sols, minéraux, végétaux et aliments.
- le procédé est mis en œuvre pour la mesure des couleurs à but médical ou cosmétique sur l'homme et le vivant d'au moins un élément compris dans le groupe suivant : peau, boutons, grains de beauté, chevelure, pelage, maquillage, et dents.
- le procédé est mis en œuvre pour l'utilisation de codes-barres en couleur, à une ou plusieurs dimensions.
- le procédé est mis en œuvre dans un but d'assistance aux personnes daltoniennes et/ou aveugles.

La présente description concerne aussi le dispositif de détermination de la réflectance d'un objet, l'objet étant éclairé par un illuminant extérieur présentant un éclairement inconnu et variable, le dispositif comprenant :

- une source, apte à émettre au moins un flash de lumière éclairant l'objet, chaque flash de lumière émis par la source présentant un éclairement connu dans une gamme de longueurs d'onde,
- un capteur, apte à collecter l'onde réfléchie par l'objet pour former au moins une image,
- une unité de traitement, propre mettre en œuvre les étapes suivantes :

  - obtention d'une équation à plusieurs inconnues, l'équation étant obtenue à partir des images formées, la réflectance de l'objet et l'éclairement de l'illuminant extérieur étant deux inconnues de l'équation,
  - résolution de l'équation,

l'étape de résolution de l'équation comprenant :

- le calcul de points solution de l'équation,
- l'interpolation des points calculés par une fonction d'interpolation, et
- l'utilisation d'au moins une des approximations suivantes pour la résolution de l'équation :

  - une première approximation selon laquelle chaque image collectée lors d'un même flash de lumière est issue de l'émission d'un flash de lumière distinct,
  - une deuxième approximation selon laquelle la fonction d'interpolation détermine les points de stabilité de l'équation, et
  - une troisième approximation selon laquelle selon laquelle l'éclairement de l'illuminant extérieur à l'instant de l'émission d'un flash de lumière est égal à une l'éclairement de l'illuminant extérieur à un instant précédent.

Suivant des modes de réalisation particuliers, le dispositif de détermination de la réflectance d'un objet comprend une ou plusieurs des caractéristiques suivantes, prise(s) isolément ou suivant toute combinaison techniquement possible :

- le capteur et la source sont disposés sur un même appareil.
- la source est un écran lumineux ou un ensemble de diodes électroluminescentes.
- le capteur est choisi dans un groupe constitué d'un appareil photo, d'une caméra, d'un imageur multicanal et d'un imageur hyperspectral.
- l'appareil est un ordiphone.

- ledit dispositif met en œuvre un ensemble de sources lumineuses pour émettre les flashs de couleur et un capteur électronique d'image pour capter la lumière réfléchie par l'objet-cible.
- ledit dispositif est un appareil photo ou une caméra avec flash intégré ou amovible.
- ledit dispositif met en œuvre des guides d'onde pour faire transiter l'émission et la réception des flashs de couleurs.
- ledit dispositif est mis en œuvre pour réaliser des photographies spectrométriques d'objets et pour réaliser des adaptations chromatiques (balance des blancs) à volonté.
- ledit dispositif est mis en œuvre pour mesurer la couleur d'un élément compris dans le groupe suivant : matériaux, solides, liquides, gaz, peintures, tapisseries, graphismes, textiles, plastiques, bois, métaux, sols, minéraux, végétaux et aliments.
- ledit dispositif est mis en œuvre pour la mesure des couleurs à but médical ou cosmétique sur l'homme et le vivant d'au moins un élément compris dans le groupe suivant : peau, boutons, grains de beauté, chevelure, pelage, maquillage, et dents.
- ledit dispositif est mis en œuvre pour l'utilisation de codes-barres en couleur, à une ou plusieurs dimensions.
- ledit dispositif est mis en œuvre dans un but d'assistance aux personnes daltoniennes et/ou aveugles.
- le dispositif comporte en outre un moyen apte à émettre des illuminants de couleur sous la forme de flux lumineux de couleurs et un capteur électronique d'images couleurs, de mesure de la réflectance diffuse uniforme $\rho^{OBJ}(\lambda)$ en au moins un point d'un objet placé dans une zone se trouvant dans le champ d'éclairement dudit moyen apte à émettre des couleurs et se trouvant dans le champ de vision dudit capteur électronique d'images couleurs et étant soumis à un illuminant extérieur sous la forme d'un flux lumineux extérieur environnant noté $I^{ext}(\lambda)$, constant et inconnu. Le dispositif comporte également des moyens pour :

  • émettre une série de N illuminants $S^{SOURCE}(\lambda)_i$ (avec N entier naturel supérieur à un, i variant de 1 à N et $\lambda$, la longueur d'onde), $S^{SOURCE}(\lambda)_i$ étant connu en fonction des paramètres d'entrée dudit moyen apte à émettre des flux lumineux de couleurs, capture par ledit capteur électronique d'image couleur du flux lumineux réfléchi en au moins un point dudit objet et entrant dans le capteur, ledit flux lumineux étant noté $E^{capteur}(\lambda)_i$, avec N entier naturel strictement supérieur à deux, i variant de 1 à N et $\lambda$ la longueur d'onde, et obtention de N équations « $E_i$ »:

  $$E^{capteur}(\lambda)_i = \rho^{OBJ}(\lambda)*(I^{ext}(\lambda)+S^{SOURCE}(\lambda)_i)$$

  en raison du caractère additif de la lumière ondulatoire et par définition de la réflectance diffuse uniforme $\rho^{OBJ}(\lambda)$ en au moins un point de l'objet ; et
  • déterminer les deux fonctions inconnues continues $\rho^{OBJ}(\lambda)$ et $I^{ext}(\lambda)$ en résolvant le système des N équations $E_i$:

  - en intégrant chaque équation $E_i$ sur l'intersection des spectres source et capteur, en notant $b_j$ chaque sensibilité dans la base colorimétrique choisie, chaque équation $E_i$ générant alors un ensemble d'équations « $E_i$ intégrée » :

  $$\int E^{capteur}(\lambda)_i * b_j(\lambda) * d\lambda = \int \rho^{OBJ}(\lambda) * \left(I^{ext}(\lambda) + S^{SOURCE}(\lambda)_i\right) * b_j(\lambda) * d\lambda$$

  - en calculant la valeur numérique correspondant au terme de gauche des équations $E_i$ intégrée à l'aide des paramètres de sortie du capteur numérique d'image ; et
  - en exprimant les deux fonctions inconnues continues $\rho^{OBJ}(\lambda)$ et $I^{ext}(\lambda)$ à l'aide d'un nombre fini de points d'interpolation $(\lambda_j, y_j)$ reliés par au moins une fonction d'interpolation $s(\lambda)$ pour conserver le caractère continu desdites fonctions inconnues continues $\rho^{OBJ}(\lambda)$ et $I^{ext}(\lambda)$, les $\lambda_j$ étant des longueurs d'onde choisies dans l'intersection des spectres source et capteur et étant des paramètres d'entrée du procédé, choisis pour minimiser le nombre de points d'interpolation à précision donnée ; et
  - en recherchant les paramètres yi des fonctions $\rho^{OBJ}(\lambda)$ et $I^{ext}(\lambda)$ qui minimisent le système de moindres carrés $\|A * X - B\|_2$ résultant des équations $E_i$ intégrées.

D'autres caractéristiques et avantages de l'invention apparaîtront à la lecture de la description qui suit de modes de réalisation de l'invention, donnée à titre d'exemple uniquement et en référence aux dessins qui sont :

- figure 1, un schéma d'un dispositif de détermination de la réflectance d'un objet,
- figure 2, un ordinogramme d'un premier exemple de mise en œuvre de procédé de détermination de la réflectance d'un objet,
- figure 3, une représentation graphique d'un spectre pour plusieurs flashs de lumière,
- figure 4, un ordinogramme d'un deuxième exemple de mise en œuvre de procédé de détermination de la réflectance d'un objet,
- figure 5, une représentation graphique de l'erreur de la réflectance déterminée par rapport à une réflectance réelle, pour plusieurs déterminations,
- figure 6, une représentation graphique de l'erreur de la réflectance déterminée par rapport à la réflectance réelle,
- figure 7, une représentation graphique de plusieurs réflectances déterminées et de la réflectance réelle,
- figure 8, une représentation graphique de la réflectance déterminée par la mise en œuvre d'un procédé de l'état de la technique et de la réflectance réelle,
- figure 9, une représentation graphique de la réflectance déterminée pour un exemple de mise en œuvre de procédé de détermination et de la réflectance réelle, et
- figure 10, un ordinogramme d'un troisième exemple de mise en œuvre de procédé de détermination de la réflectance d'un objet.

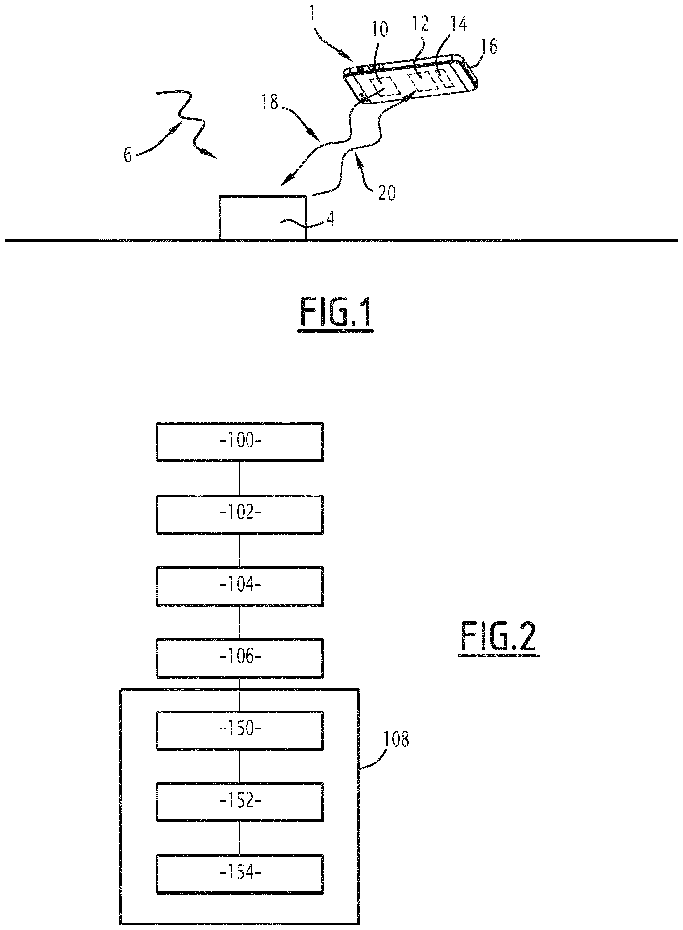

Un dispositif 1 de détermination de la réflectance d'un objet 4, un objet 4 et un illuminant extérieur 6 sont représentés sur la figure 1.

Le dispositif 1 de détermination de la réflectance d'un objet 4 comprend une source 10, un capteur 12 et une unité de traitement 14.

Le dispositif 1 de détermination est propre à mettre en œuvre un procédé de détermination de la réflectance d'un objet 4, dont un exemple de mise en œuvre est représenté sur la figure 2.

La réflectance réelle d'un objet, notée $\rho_{réelle}$, est une fonction $\rho_{réelle}(\lambda)$ de la longueur d'onde notée À.

La réflectance donne une information sur la couleur de l'objet 4 au sens chromatique. La réflectance de l'objet 4 dépend de la matière de la surface de réflexion de l'objet 4.

La réflectance d'un objet 4 est définie comme le rapport entre la luminance reçue par l'objet 4 et la luminance réfléchie par l'objet 4.

La luminance est une grandeur correspondant à la sensation visuelle de luminosité d'une surface. La luminance reçue par l'objet 4 se définit comme le quotient de l'intensité lumineuse reçue par l'objet 4 par l'aire de la surface apparente de l'objet 4. La luminance réfléchie par l'objet 4 se définit comme le quotient de l'intensité lumineuse réfléchie par l'objet 4 par l'aire de la surface apparente de l'objet 4. La surface apparente est la projection de l'aire de l'objet 4 perpendiculairement à une direction d'observation.

L'éclairement de l'objet 4 est connu à partir de la luminance reçue par l'objet 4 et de la géométrie d'observation.

Dans le procédé de détermination, la surface de l'objet 4 est considérée comme une surface Lambertienne. Une surface Lambertienne est une surface où la luminance est indépendante de la direction d'observation. La composante spéculaire de la surface de l'objet 4, c'est-à-dire son aspect brillant, est supposée négligeable ou n'est pas collectée par le dispositif 1 grâce à un arrangement géométrique adapté entre la source de lumière 10, l'objet 4 et le capteur 12.

L'éclairement de l'objet 4 correspond à un flux lumineux reçu par unité de surface.

La détermination de la réflectance consiste à trouver une réflectance déterminée notée p, la plus proche possible selon une norme, de la réflectance réelle $\rho_{réelle}$ d'un objet 4 sur une gamme de longueurs d'onde. La gamme de longueurs d'onde dépend de la source 10 et du capteur 12 du dispositif 1 de détermination. Par exemple, la réflectance est déterminée sur une gamme de longueurs d'onde dans le domaine du visible.

La réflectance déterminée est notée p dans la suite de la description.

La réflectance déterminée p par le procédé de détermination est avantageusement proche de la réflectance réelle $\rho_{réelle}$ sur une gamme de longueurs d'onde comme décrit par la suite.

Une erreur F de la réflectance déterminée p par rapport à la réflectance réelle $\rho_{réelle}$ est une fonction de la longueur d'onde définie à partir de l'écart-type entre la réflectance réelle $\rho_{réelle}$ et la réflectance déterminée p.

L'erreur F est une fonction nulle si la réflectance déterminée p est égale à la réflectance réelle $\rho_{réelle}$ pour toutes les longueurs d'ondes. Plus l'erreur F est grande, plus cela indique que l'écart entre la réflectance déterminée p et la réflectance réelle $\rho_{réelle}$ est grand.

Il est entendu que le procédé de détermination de la réflectance p et le dispositif 1 de détermination de la réflectance p d'un objet 4, sont applicables pour déterminer la réflectance p de tout objet 4.

Par exemple, l'objet 4 est une partie de la peau d'un patient, un code-barres en couleur, une peinture, un produit cosmétique comme un fond de teint ou autre.

L'objet 4 est disposé dans un environnement comprenant un nombre inconnu de sources d'éclairement de l'objet 4. L'ensemble des sources éclairant l'objet 4 peut varier au cours du procédé de détermination de la réflectance de l'objet 4. En outre, l'éclairement, provenant des différentes sources éclairant l'objet 4 et distinctes de la source 10 du dispositif 1 de détermination, peut fluctuer au cours du procédé de détermination de la réflectance de l'objet 4.

Par exemple, un objet 4, placé dans une vitrine éclairée, est éclairé par la lumière du jour traversant la vitrine et par les lampes intérieures du magasin, avec des flux lumineux inconnus et variables.

L'ensemble des sources éclairant l'objet 4 et distinctes de la source 10 du dispositif 1 de détermination est représenté par un illuminant extérieur 6 présentant un éclairement inconnu et variable en fonction du temps, noté I.

L'éclairement I de l'illuminant extérieur 6 dépend de l'ensemble des fluctuations des sources d'éclairement de l'objet 4 distinctes de la source du dispositif 10 éclairant l'objet 4.

Dans des conditions particulières, l'éclairement I de l'illuminant extérieur 6 est fixe.

A chaque instant, l'objet 4 est éclairé par l'illuminant extérieur 6 et, éventuellement, par la source 10. L'éclairement reçu par l'objet 4 est la somme de l'éclairement provenant de la source 10 du dispositif 1 de détermination avec l'éclairement de l'illuminant extérieur 6.

A chaque instant t, l'objet 4 éclairé par l'illuminant extérieur 6 et, éventuellement, par la source 10, réfléchit une onde 20 dépendant de la réflectance réelle $\rho_{réelle}$ de l'objet 4.

Dans le mode de réalisation du dispositif 1 de détermination représenté sur la figure 1, le capteur 12 et la source 10 sont disposés sur un même appareil 16.

Par exemple, l'appareil 16 est une tablette tactile, un téléphone portable, un ordiphone, ou autre.

La source 10 est apte à émettre au moins un flash de lumière 18 éclairant l'objet 4.

Par exemple, la source 10 est un écran lumineux ou un ensemble de lampes. Par exemple, l'ensemble de lampes est un ensemble de diodes électroluminescentes (désigné par l'acronyme « LED »).

Un flash de lumière 18 est un flux lumineux émis pendant un court intervalle de temps. Par exemple, l'intervalle de temps d'émission est compris entre 1 ms (milliseconde) et 2 s (seconde). L'intervalle de temps d'émission dépend des caractéristiques de la source 10 et du capteur 12.

Le flux lumineux du flash de lumière 18 présente une intensité d'émission en fonction de la longueur d'onde dépendant de la source 10.

La source 10 est apte à émettre chaque flash 18 dans le domaine du visible. Cela signifie que pour chaque flash 18, l'intensité d'émission est supérieure à un seuil de perception de l'œil humain pour au moins une longueur d'ondes comprises entre 380 nm (nanomètres) et 800 nm. En variante ou en complément, la source 10 est apte à émettre dans le domaine de l'infrarouge, notamment à une longueur d'onde comprise entre 800 nm et 1000 nm.

Chaque flash i de lumière 18 émis par la source 10 présente un éclairement de l'objet 4, noté $E_i$ et dépendant de la longueur d'onde. Pour chaque flash i, l'éclairement $E_i$ dans une gamme de longueurs d'onde, est une caractéristique de la source 10, connue. Les caractéristiques de la source 10 sont conservées dans une mémoire.

Les caractéristiques de la source 10 sont déterminées avant la mise en œuvre du procédé de détermination.

La gamme de longueurs d'onde est délimitée par une valeur de longueur d'onde minimum $\lambda_{min}$ et une valeur de longueur d'onde maximum $\lambda_{max}$. Chaque longueur d'onde de la gamme de longueurs d'onde est comprise entre la valeur de longueur d'onde minimum $\lambda_{min}$ et la valeur de longueur d'onde maximum $\lambda_{max}$. La gamme de longueurs d'onde dépend de la source 10 et du capteur 12 utilisé pour l'émission et la réception des flashs 18.

La source 10 est propre à émettre des flashs de lumière 18. L'éclairement $E_i$ d'un flash i présente un maximum d'éclairement dans la gamme de longueurs d'onde. Le maximum d'éclairement est un maximum global de l'éclairement $E_i$ en fonction de la longueur d'onde. Le maximum d'éclairement d'un flash i se trouve à une longueur d'onde notée $\lambda_i$.

L'instant où la source 10 émet un flash est appelé instant d'émission. Chaque instant d'émission d'un flash i est noté $t_i$. L'instant d'émission $t_i$ de chaque flash i est une donnée conservée dans une mémoire.

La source 10 est propre à émettre plusieurs flashs 18 successivement. L'intervalle de temps entre deux instants d'émission $t_i$, $t_j$ de flashs i, j successifs est, par exemple, compris entre 1 ms et 2 s.

La source 10 est propre à émettre plusieurs flashs 18 de couleurs différentes, c'est-à-dire présentant des spectres différents. La source 10 est propre à émettre au moins deux flashs i, j de lumière 18 émis présentant un maximum d'éclairement à des longueurs d'ondes $\lambda_i$ et $\lambda_j$ éloignées d'au moins 20 nanomètres (nm).

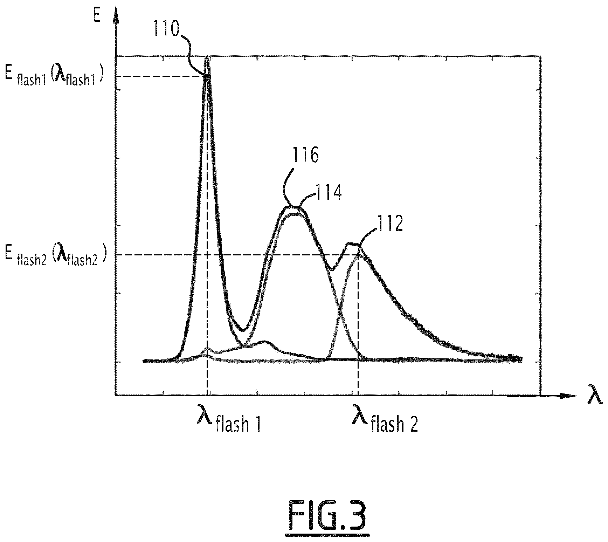

Dans un exemple, la source 10 est propre à émettre quatre flashs : un flash bleu, un flash rouge, un flash vert et un flash blanc. Sur la figure 3, chaque courbe 110, 112, 114, 116 représente l'éclairement de l'objet 4 par la source 10 en fonction de la longueur d'onde, sans illuminant extérieur 6, pour un flash respectif. Sur la figure 3, le flash bleu « flashl », correspondant à la première courbe 110 présente un maximum d'éclairement à la valeur $\lambda_{flash1}$, alors que le flash rouge « flash2 », correspondant à la deuxième courbe notée 112 présente un maximum d'éclairement à la valeur $\lambda_{flash2}$.

Le capteur 12 est apte à collecter l'onde réfléchie 20 par l'objet 4 pour former au moins une image.

Par exemple, le capteur 12 est un appareil photo ou une caméra.

Le capteur 12 est propre à détecter des intensités lumineuses dans la gamme de longueurs d'onde d'émission de la source 10.

La sensibilité du capteur 12 dans la gamme de longueurs d'onde est une caractéristique du capteur 12 conservée dans une mémoire. Les caractéristiques du capteur 12 sont déterminées avant la mise en œuvre du procédé de détermination.

En outre, la partie sensible du capteur 12 n'est pas orientée vers la source 10. Ceci permet que la collection de l'onde réfléchie 20 ne soit pas perturbée par la lumière directe du flash de lumière 18 émis par la source 10.

L'image formée contient des données colorimétriques. Pour chaque image k formée, les données de l'image sont notées $B_k$.

L'instant où le capteur 12 forme une image est appelé instant de collection. Chaque instant de collection d'une image k est noté $t_k$. De même, l'instant de collection $t_k$ de chaque image k est une donnée conservée dans une mémoire.

Le capteur 12 est propre à collecter plusieurs images successivement. Le capteur 12 est rapide, c'est-à-dire que le capteur 12 est propre à former des images à des instants de collection rapprochées. L'intervalle de temps entre deux instant de collection $t_k$, $t_l$ d'images de flashs k, l successifs est, par exemple, compris entre 1 ms et 2 s.

Dans le mode de réalisation du dispositif 1 représenté sur la figure 1, l'unité de traitement 14 est disposée sur l'appareil 16 où sont disposés la source 10 et le capteur 12.

L'unité de traitement 14 comprend, par exemple, des processeurs et des mémoires.

L'unité de traitement 14 est apte à traiter des données. L'unité de traitement 14 est, de plus, propre à recevoir les données du capteur 12 relatives à chaque image k formée et à chaque instant de collection $t_k$ et les données de la source 10 relatives aux éclairements $E_i$ de chaque flash i émis et aux instants d'émission $t_i$.

L'unité de traitement 14 est propre à obtenir une équation à plusieurs inconnues à partir des images formées. Dans la suite, l'équation obtenue est notée équation à résoudre (1).

La réflectance p de l'objet 4 et l'éclairement I de l'illuminant extérieur 6 sont deux inconnues de l'équation à résoudre (1).

En outre, l'unité de traitement 14 est propre à assurer la résolution de l'équation à résoudre (1).

L'obtention et la résolution de l'équation à résoudre (1) par l'unité de traitement 14 sont décrites dans la suite de la description.

Le fonctionnement du dispositif 1 est maintenant décrit en référence à la figure 2 qui est un ordinogramme d'un premier exemple de mise en œuvre du procédé de détermination de la réflectance p de l'objet 4.

Le procédé de détermination de la réflectance p comprend les cinq étapes suivantes : une étape d'éclairement 100, une étape d'émission 102, une étape de collection 104, une étape d'obtention 106 et une étape de résolution 108.

Lors de l'étape d'éclairement 100, à chaque instant noté t, l'objet 4 est éclairé par l'illuminant extérieur 6 présentant l'éclairement $I_t$.

L'étape d'émission 102 est mise en œuvre par la source 10 du dispositif 1.

Lors de l'étape d'émission 102, la source 10 émet à un instant d'émission $t_i$, un flash de lumière i éclairant l'objet 4.

Dans un mode de réalisation préféré, lors de l'étape d'émission, la source 10 émet une pluralité de flashs de lumière 18, chaque flash i étant émis à différents instants d'émission $t_i$.

Les instants d'émission $t_i$ et les éclairements $E_i$ de chaque flash i de lumière 18 émis sont transmis à l'unité de traitement 14.

L'étape de collection 104 est mise en œuvre par le capteur 12 du dispositif 1.

Lors de l'étape de collection 104, l'onde réfléchie 20 par l'objet 4 est collectée pour former au moins une image à un instant de collection sur le capteur 12.

Dans un mode de réalisation préféré, l'étape de collection 104 est mise en œuvre pour chaque flash de lumière 18 émis.

Les données relatives aux instants de collection et aux images formées sont transmises à l'unité de traitement 14.

L'unité de traitement 14 reçoit les données relatives aux éclairements des flashs, aux instants d'émission $t_i$, aux instants de collection $t_k$ et aux images formées respectivement de la source 10 et du capteur 12.

Lors de l'étape d'obtention 106, il est obtenu l'équation à résoudre (1).

L'étape d'obtention 106 est mise en œuvre par l'unité de traitement 14.

L'unité de traitement 14 convertit chaque image formée en une équation.

Par exemple, pour chaque image k, l'unité de traitement 14 détermine si l'instant de collection $t_k$ de l'image k a lieu à un instant d'émission d'un flash.

Deux cas sont alors possibles.

Dans un premier cas, si l'instant de collection $t_i$ d'une image i est un instant d'émission d'un flash, le flash est noté i, et l'unité de traitement 14 obtient, à partir de l'image k, une première équation (2) reliant les données $B_i$ de l'image i formée à la réflectance p de l'objet 4.

La première équation (2) s'écrit sous la forme suivante dans le cas d'une surface Lambertienne:

$$B_i = K_1 * \int_{\lambda_{\min}}^{\lambda_{\max}} \rho(\lambda) * \left(E_i + I_{t_i}\right)(\lambda) * b(\lambda) d\lambda$$

où :

- $K_1$ est une première constante,
- '*' désigne l'opération de multiplication,
- $\int_{\lambda_{min}}^{\lambda_{max}} f(\lambda)\, d\lambda$ désigne l'opération mathématique d'intégrer la fonction f sur la variable A dans l'intervalle $[\lambda_{min}, \lambda_{max}]$.

Dans un deuxième cas, si l'instant de collection $t_k$ d'une image k n'est pas un instant d'émission d'un flash, l'unité de traitement 14 obtient, à partir de l'image k, une deuxième équation (3) reliant les données $B_k$ de l'image k formée à la réflectance p de l'objet 4.

La deuxième équation (3) s'écrit sous la forme suivante :

$$B_k = K_1 * \int_{\lambda_{min}}^{\lambda_{max}} \rho(\lambda) * I_{t_k}(\lambda) * b(\lambda)d\lambda$$

L'unité de traitement 14 extrait alors au moins une première équation (2) ou une deuxième équation (3) pour former l'équation à résoudre (1).

Avantageusement, l'équation à résoudre (1) est un système d'équations formé à partir de premières équations (2) et /ou de deuxièmes équations (3) obtenues pour plusieurs images formées.

L'équation (1) comprend N1 premières équations (2) et N2 deuxièmes équations (3), où N1 est un nombre entier naturel non nul d'images formées à un instant de collection qui est un instant d'émission et N2 est un nombre entier d'images formées à un instant de collection sans émission de flash.

La réflectance p de l'objet 4 et l'éclairement I de l'illuminant extérieur 6 sont deux inconnues de l'équation à résoudre (1).

Pour la suite, il est à noter que l'équation à résoudre (1) est aisément représentable sous la forme d'une équation matricielle, pour une surface Lambertienne.

A l'issue de l'étape d'obtention 106, l'équation à résoudre (1) a été obtenue à l'aide de l'unité de traitement 14.

L'étape de résolution 108 est alors mise en œuvre par l'unité de traitement 14.

L'étape de résolution 108 vise à résoudre l'équation à résoudre (1).

Plus précisément, lors de l'étape de résolution 108, l'objectif est de rechercher une réflectance p, solution de l'équation à résoudre (1).

Dans le cas général, la solution de l'équation à résoudre (1) est fortement sensible aux erreurs d'observation et/ou de modélisation.

Pour limiter l'influence des erreurs sur la solution p, il est proposé de combiner trois sous-étapes lors de la résolution 108.

Aussi, selon l'exemple de mise en œuvre de la figure 2, l'étape de résolution 108 comprend trois sous-étapes.

Les trois sous-étapes 150, 152, 154 de la résolution 108 sont mises en œuvre successivement ou en parallèle par l'unité de traitement 14.

Lors de la première sous-étape 150, il est calculé les points solution de l'équation à résoudre (1).

L'unité de traitement 14 détermine le nombre N de points solution P à calculer. Le nombre N de points solution à calculer est un nombre entier naturel non nul.

Chaque point solution P à calculer comporte deux coordonnées, une abscisse et une ordonnée.

Selon l'exemple proposé, les abscisses sont d'abord déterminées puis les ordonnées associées sont calculées.

L'unité de traitement 14 détermine N longueurs d'onde de calcul $\lambda_P$, chaque longueur d'onde de calcul étant l'abscisse d'un point solution.

Typiquement, par exemple, le nombre N de points solutions P à calculer est compris entre 4 et 10.

Par exemple, les longueurs d'ondes de calcul $\lambda_P$ sont réparties uniformément sur la gamme de longueurs d'onde.

Pour chaque point solution P, l'unité de traitement 14 calcule une valeur de réflectance pp associée à la longueur d'onde de calcul $\lambda_P$ vérifiant l'équation à résoudre (1).

A l'issue de la sous-étape de calcul 150 de points solution, l'unité de traitement 14 obtient une pluralité de points solution P. Chaque point solution P comprend une valeur de réflectance pp associée à une longueur d'onde de calcul $\lambda_P$ vérifiant l'équation à résoudre (1).

Lors de la deuxième sous-étape 152, une interpolation des points solution P est mise en œuvre par l'unité de traitement 14 à l'aide d'une fonction d'interpolation.

Pour mettre en œuvre la deuxième sous-étape 152, il est utilisé les points solution P trouvés lors de la première sous-étape, l'équation à résoudre (1) et des critères d'interpolation.

Les critères d'interpolation définissent le type de fonctions d'interpolation à examiner.

Selon un exemple, les critères d'interpolation délimitent un espace autour de l'équation à résoudre (1) par lequel les points de la fonction d'interpolation doit passer.

Selon un autre exemple, les critères d'interpolation limitent les fonctions d'interpolation à utiliser.

Ainsi, dans un cas particulier, la fonction d'interpolation est écrite sous la forme d'une combinaison pondérée d'un nombre fini $n_p$ de fonctions de base $\phi_k$.

Par exemple, la fonction d'interpolation de la réflectance p s'écrit sous la forme suivante :

$$\rho(\lambda) = \sum_{k=1}^{n_p} a_k * \phi_k(\lambda)$$

où les coefficients $a_k$ sont les poids associés aux fonctions de base $\phi_k$.

Lors de la deuxième sous-étape 152, l'unité de traitement 14 détermine les valeurs des poids $a_k$ et les formes des fonctions de base $\phi_k$.

Par exemple, selon un critère d'interpolation, l'unité de traitement 14 définit chaque point solution P comme un point d'interpolation.

En variante, d'autres critères d'interpolation sont utilisés lors de la deuxième sous-étape 152.

Par exemple, selon un critère d'interpolation, les fonctions de base $\phi_k$ sont des splines cubiques scellées. Une spline cubique est un polynôme cubique défini par morceaux. Chaque morceau de la fonction est une fonction polynômiale d'ordre trois sur chaque intervalle de longueurs d'ondes délimité par deux points d'interpolation.

A l'issue de la deuxième sous-étape 152 des points calculés, l'unité de traitement 14 obtient une fonction d'interpolation vérifiant les critères d'interpolation.

La demanderesse a constaté que cette manière de résoudre l'équation à résoudre (1) conduit parfois à des solutions non optimales.

Pour pallier ce problème, une troisième sous-étape 154 est mise en œuvre en même temps que la première sous-étape 150 ou la deuxième sous-étape 152.

Lors de cette troisième sous-étape 154, il est utilisé au moins une approximation parmi une première approximation et une deuxième approximation. En variante ou en complément, lors de cette troisième sous-étape 154, il est utilisé une troisième approximation par l'unité de traitement 14.

Selon la première approximation, chaque image collectée lors d'un même flash de lumière est issue de l'émission d'un flash de lumière 18 distinct.

Selon la deuxième approximation, la fonction d'interpolation détermine les points de stabilité de l'équation à résoudre (1).

Selon la troisième approximation, l'éclairement de l'illuminant extérieur 6 à l'instant de l'émission d'un flash de lumière 18 est égal à l'éclairement de l'illuminant extérieur 6 à un instant précédent.

A l'issue de l'étape de résolution 108, l'unité de traitement 14 obtient une réflectance déterminée p.

Le choix des approximations résulte de tests de la demanderesse d'une pluralité d'approximations possibles, ces approximations ayant l'avantage de rendre le procédé de détermination de la réflectance fiable et facile à mettre en œuvre.

Dans chacun des cas, il en résulte une meilleure réflectance déterminée p à temps de calcul égal.

Des modes d'implémentation particuliers de chacune des approximations sont détaillés dans ce qui suit.

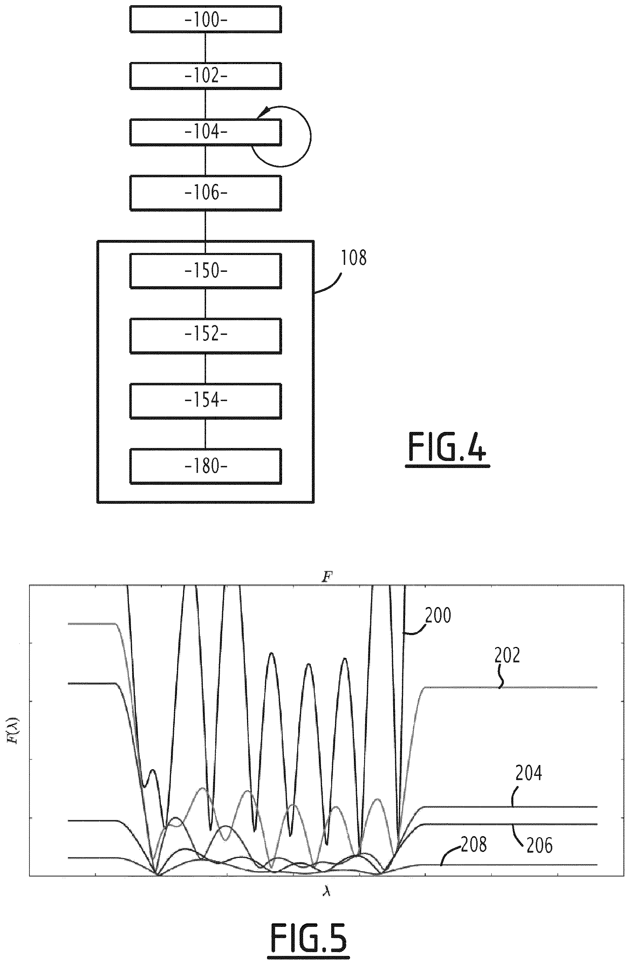

La figure 4 est un ordinogramme illustrant une mise en œuvre particulière du procédé de détermination de la réflectance p lorsque la première approximation est mise en œuvre.

Les mêmes étapes que pour la mise en œuvre du procédé selon la figure 2 sont mises en œuvre.

L'étape de collection 104 est mise en œuvre plusieurs fois lors d'un même flash de lumière.

En utilisant la première approximation, il est considéré que chaque image provient d'un flash différent.

Il en résulte qu'à l'étape d'obtention 106, l'équation à résoudre (1) comporte plus d'équations que d'inconnues. L'équation à résoudre (1) est donc surdéterminée.

Il est alors extrait de l'équation à résoudre (1) une pluralité de sous-équations à résoudre. Chaque sous-équation à résoudre forme un système surdéterminé.

A l'étape de résolution 108, il est résolu chaque sous-équation.

Il en résulte une pluralité de réflectances solution $\rho_{solution}$, chacune vérifiant l'équation à résoudre (1).

Pour déterminer la réflectance p, il est procédé au calcul de la moyenne de la pluralité de réflectances solution $\rho_{solution}$ lors d'une quatrième sous-étape 180 de l'étape de résolution 108.

Par exemple, le calcul de moyenne est mis en œuvre par un calcul de moyenne arithmétique.

Selon un autre exemple, le calcul de moyenne est mis en œuvre par un calcul de moyenne quadratique.

Un tel mode de réalisation est aisé à mettre en œuvre puisqu'aucun flash supplémentaire n'est impliqué. En particulier, tout en améliorant la précision, un tel procédé est mis en œuvre avec la même rapidité.

Une mise en œuvre particulière du procédé de détermination de la réflectance p est maintenant décrite lorsque la deuxième approximation est mise en œuvre.

Dans cet exemple, il est proposé de réduire le nombre de points d'interpolation aux points de stabilité de l'équation.

Selon la deuxième approximation, les points de stabilité de l'équation sont déterminés par les fonctions d'interpolation.

De préférence, les points d'interpolation sont répartis sur un intervalle de longueurs d'onde, l'intervalle de longueur d'onde étant, par exemple, compris entre 380 nanomètres et 780 nanomètres dans le cas d'un ordiphone.

Cette deuxième approximation résulte de travaux de la demanderesse illustrés par les figures 5 à 7.

Une simulation numérique de l'erreur F a été réalisée pour plusieurs simulations de détermination de la réflectance p.

Dans chaque simulation, des valeurs de bruits différents sont ajoutées à chaque donnée d'images et à chaque éclairement de flash. Par exemple, le bruit ajouté est un bruit blanc gaussien. Le bruit est une modélisation des différents défauts à la source 10 ou au capteur 12.

La figure 5 représente la fonction d'erreur F en fonction de la longueur d'onde $\lambda$ selon le nombre de points d'interpolation retenus pour la fonction d'interpolation de $\rho(\lambda)$. Chaque courbe 200, 202, 204, 206, 208 est obtenue respectivement pour neuf, huit, sept, six ou cinq points d'interpolation.

L'analyse de la figure 5 montre que certaines longueurs d'onde sont plus sensibles au bruit que d'autres et que plus le nombre de points d'interpolation est important, c'est-à-dire que plus la fonction d'interpolation comprend de fonctions de base, plus l'équation à résoudre (1) est sensible aux instabilités.

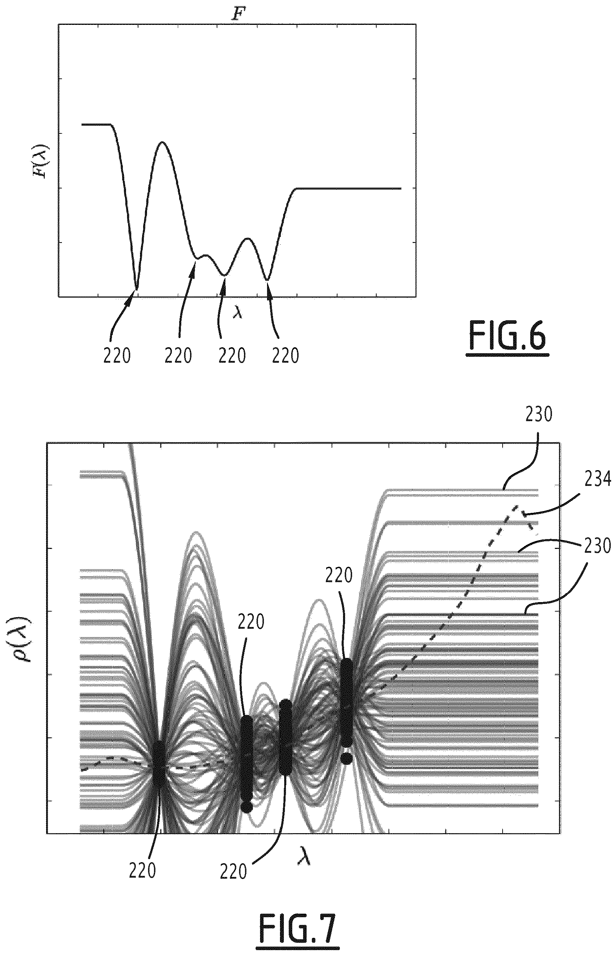

La figure 6 représente la fonction d'erreur F en fonction de la longueur d'onde pour cinq points d'interpolation. L'échelle a été modifiée par rapport à l'échelle de la figure 5 pour montrer les détails de la fonction d'erreur F. La fonction d'erreur F présente 4 minima 220, qui sont des points de stabilité de l'équation à résoudre (1). La réflectance p trouvée pour les longueurs d'ondes minimisant la fonction F est moins sensible au bruit.

Dans l'exemple, le nombre de point d'interpolation est donc égal à 4.

Avantageusement, le nombre de points d'interpolation est égal au nombre de flashs 18.

Sur la figure 7, chaque courbe 230 en trait pleins représente la réflectance p en fonction de la longueur d'onde pour cent réflectances p calculées avec différentes simulation de bruit. La courbe 234 en pointillés représente la réflectance réelle, connue par d'autres moyens. Les points de stabilités 220 sont les des points autour desquels l'écart entre la réflectance p réel et les réflectances p calculés est moins important qu'à l'écart des points de stabilité 220.

Ces simulations illustrent l'intérêt de la deuxième approximation.

Dans tous les modes de réalisation, le procédé de détermination de la réflectance p d'un objet permet d'obtenir une modélisation fiable de la réflectance p réelle de l'objet même avec un illuminant extérieur variable. Par fiable, il est entendu que la réflectance p déterminée par l'interpolation dépend peu des erreurs liés aux bruits de la source 10 et du capteur 12.

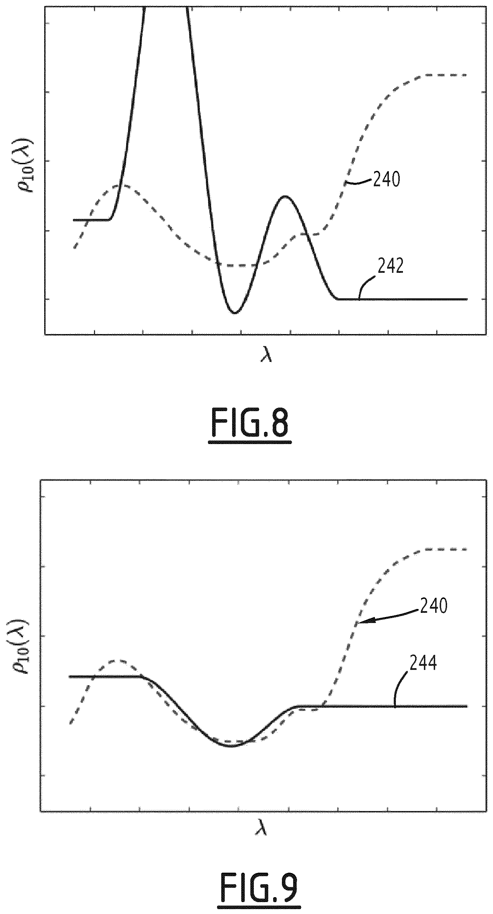

Les figures 8 et 9 illustrent l'avantage de la mise en œuvre du procédé de détermination de la demanderesse. Sur les figures 8 et 9, la courbe 240 en pointillés représente la réflectance réelle $\rho_{réelle}$ connue par d'autres moyens.

Sur la figure 8, la courbe en trait plein 242 représente la réflectance déterminée avec la mise en œuvre d'un procédé n'utilisant ni la première approximation, ni la deuxième approximation. Sur la figure 9, la courbe en trait plein 244 représente la réflectance déterminée avec la mise en œuvre d'un procédé de détermination selon l'invention. L'analyse des figures 8 et 9 montre que la réflectance déterminée à partir du procédé de détermination est plus proche de la réflectance réelle $\rho_{réelle}$ que la réflectance déterminée à partir du procédé n'utilisant ni la première approximation, ni la deuxième approximation.

La troisième approximation permet de réduire le nombre d'inconnues dans l'équation à résoudre (1).

Il en résulte une meilleure réflectance déterminée p à temps de calcul égal. La difficulté a été, pour la demanderesse, de sélectionner une approximation diminuant le temps de calcul sans pénaliser la précision de la réflectance déterminée p.

Un mode d'implémentation particulier de la troisième approximation est détaillé dans ce qui suit.

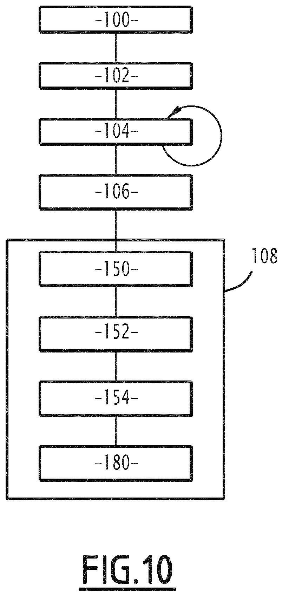

La figure 10 est un ordinogramme illustrant une mise en œuvre particulière du procédé de détermination de la réflectance p.

Les mêmes étapes que pour la mise en œuvre du procédé selon la figure 2 sont mises en œuvre.

En outre, le procédé comporte trois étapes additionnelles.

Selon la première étape additionnelle 160, il est pris une image de référence par le capteur 12 en l'absence de flash émis par la source 10.

Similairement à ce qui est expliqué précédemment, il est possible d'en déduire une équation reliant les données de l'image de référence au comportement spectral de l'objet 4. Une telle équation est appelée équation de référence (4).

La troisième approximation selon laquelle l'éclairement de l'illuminant extérieur 6 à l'instant de l'émission d'un flash de lumière 18 est égal à l'éclairement de l'illuminant extérieur 6 à un instant précédent est alors utilisable comme suit.

L'équation de référence (4) donne accès à l'éclairement de l'illuminant extérieur 6. La résolution de l'équation à résoudre (1) est alors simplifiée par une opération de soustraction de l'équation de référence (4).

Cette opération supprime une inconnue de l'équation à résoudre (1), à savoir l'éclairement de l'illuminant extérieur 6, ce qui résulte en une équation simplifiée.

La première sous-étape 150 et la deuxième sous-étape 152 sont alors mise en œuvre sur l'équation simplifiée.

Dans le mode de réalisation illustré sur la figue 10, il est également mis en œuvre une deuxième étape additionnelle 170 et une troisième étape additionnelle 172.

Lors de la deuxième étape additionnelle 170, il est estimé un intervalle de temps de variation de l'éclairement de l'illuminant extérieur 6.

Une telle estimation est, par exemple, obtenue en comparant une série d'images prises par le capteur 12.

Lors de la troisième étape additionnelle 172, il est déterminé une fréquence de prise d'image de référence pour assurer qu'une image de référence ait été prise dans l'intervalle de temps de variation estimé.

Par exemple, la fréquence de prise d'image est déduite par une relation numérique de l'intervalle de temps de variation déterminée.

Une telle relation est par exemple une relation de proportionnalité.

Selon un autre exemple, une telle relation est une relation linéaire conduisant à fixer une marge de sécurité.

Un tel mode de réalisation est aisé à mettre en œuvre puisqu'il suffit de prendre une image supplémentaire. En particulier, aucun matériel supplémentaire n'est utilisé.

Dans tous les modes de réalisation, le procédé de détermination de la réflectance p d'un objet permet d'obtenir une modélisation fiable de la réflectance p réelle de l'objet même avec un illuminant extérieur variable. Par fiable, il est entendu que la réflectance p déterminée par l'interpolation dépend peu des erreurs liées aux bruits de la source 10 et du capteur 12.

Dans une variante, le capteur 12 et la source 10 sont disposés sur des appareils 16 différents.

Dans une variante, le capteur 12 et la source 10 sont disposés sur le même appareil 16 et l'unité de traitement 14 est située à l'écart de l'appareil 16.

En outre, il est à noter que le procédé permet de déterminer la réflectance de la surface observée pour chaque point image du capteur 12.

## Revendications

**1.** Procédé de détermination de la réflectance d'un objet (4), le procédé comprenant les étapes de :

- éclairement de l'objet (4) par un illuminant extérieur (6) présentant un éclairement inconnu et variable,
- émission d'au moins un flash de lumière (18) éclairant l'objet (4), chaque flash de lumière (18) étant émis par une source (10) et présentant un éclairement connu dans une gamme de longueurs d'onde,
- collection de l'onde réfléchie (20) par l'objet (4) pour former au moins une image sur un capteur (12), l'étape de collection étant appliquée à des instants d'émission de flash et sans émission de flash,
- obtention d'une équation à plusieurs inconnues, l'équation étant obtenue à partir des images formées, la réflectance de l'objet (4) et l'éclairement de l'illuminant extérieur (6) étant deux inconnues de l'équation,
- résolution de l'équation,

l'étape de résolution de l'équation comprenant :

- le calcul de points solution de l'équation,
- l'interpolation des points calculés par une fonction d'interpolation, et
- l'utilisation d'une première approximation pour la résolution de l'équation, la première approximation étant une approximation selon laquelle chaque image collectée lors de l'émission d'un même flash de lumière (18) est issue de l'émission d'un flash de lumière distinct, résultant en ce que l'équation soit une équation surdéterminée dont est extraite une pluralité de sous-équations à résoudre, lesdites sous-équations formant un système surdéterminé à résoudre et selon laquelle la résolution de l'équation comporte la résolution de chaque sous-équations pour obtenir une pluralité de réflectances solution et le calcul de la moyenne de la pluralité de réflectances solution pour obtenir la réflectance de l'objet (4).

**2.** Procédé selon la revendication 1, dans lequel l'étape de résolution de l'équation comporte aussi l'utilisation d'une deuxième approximation selon laquelle la fonction d'interpolation détermine les points de stabilité de l'équation et selon laquelle les points de stabilité sont utilisés dans l'étape de résolution de l'équation, les points de stabilité étant les points de la fonction d'interpolation pour lesquels la solution est moins sensible aux instabilités.

3. Procédé selon la revendication 1 ou 2, dans lequel l'étape de résolution de l'équation comporte aussi l'utilisation d'une troisième approximation selon laquelle l'éclairement de l'illuminant extérieur (6) à l'instant de l'émission d'un flash de lumière est égal à l'éclairement de l'illuminant extérieur (6) à un instant précédent, la troisième approximation étant utilisée lors de l'étape de résolution de l'équation, le procédé comprenant une étape de prise d'une image de référence par collection de l'onde réfléchie (20) par l'objet (4) pour former au moins une image sur un capteur (12) en l'absence de flash (18) émis par la source. l'étape de résolution de l'équation comprenant une opération de soustraction d'une équation de référence pour obtenir une équation simplifiée, l'équation de référence étant obtenue à partir de l'image de référence.

4. Procédé selon l'une quelconque des revendications 1 à 3, dans lequel la source (10) et le capteur (12) sont disposés sur un même appareil (16).

5. Procédé selon l'une quelconque des revendications 1 à 4, dans lequel une pluralité de flashs de lumière (18) sont émis, chaque flash (18) présentant un maximum d'éclairement en longueur d'onde, l'étape de collection étant mise en œuvre pour chaque flash de lumière (18) émis et au moins deux flashs de lumière (18) présentent un maximum d'éclairement éloigné d'au moins 20 nanomètres.

6. Procédé selon la revendication 2 ou l'une quelconque des revendications 3 à 5 lorsqu'elles dépendent de la revendication 2, dans lequel la deuxième approximation est utilisée lors de l'étape de résolution de l'équation et dans lequel la fonction d'interpolation est une combinaison pondérée de fonctions de bases scellée par un nombre fini de points d'interpolation, notamment des splines cubiques, chaque point d'interpolation étant un point de stabilité de l'équation.

7. Procédé selon la revendication 6, dans lequel une pluralité de flashs de lumière (18) sont émis, chaque flash (18) présentant un maximum d'éclairement en longueur d'onde, l'étape de collection étant mise en œuvre pour chaque flash de lumière (18) émis, et les points d'interpolations vérifient au moins la propriété suivante :

   - le nombre de point d'interpolation est égal au nombre de flashs (18).

8. Procédé selon la revendication 3, dans lequel le procédé comporte, en outre, les étapes de :

   - estimation d'un intervalle de temps de variation de l'éclairement de l'illuminant extérieur (6),
   - à partir de l'intervalle de temps de variation estimé, détermination de la fréquence à laquelle l'étape de prise d'une image de référence est à réitérer pour que la troisième approximation reste valable

9. Dispositif de détermination (1) de la réflectance d'un objet (4), l'objet (4) étant éclairé par un illuminant extérieur (6) présentant un éclairement inconnu et variable, le dispositif (1) comprenant :

   - une source (10) apte à émettre au moins un flash de lumière (18) éclairant l'objet (4), chaque flash de lumière (18) émis par la source (10) présentant un éclairement connu dans une gamme de longueurs d'onde,
   - un capteur (12) apte à collecter l'onde réfléchie (20) par l'objet (4) pour former au moins une image à des instants d'émission de flash et sans émission de flash,
   - une unité de traitement (14), propre mettre en œuvre les étapes suivantes :

      - obtention d'une équation à plusieurs inconnues, l'équation étant obtenue à partir des images formées, la réflectance de l'objet (4) et l'éclairement de l'illuminant extérieur (6) étant deux inconnues de l'équation,
      - résolution de l'équation,

   l'étape de résolution de l'équation comprenant :

      - le calcul de points solution de l'équation,
      - l'interpolation des points calculés par une fonction d'interpolation, et
      - l'utilisation d'une première approximation pour la résolution de l'équation, la première approximation étant une approximation selon laquelle chaque image collectée lors de l'émission d'un même flash de lumière (18) est issue de l'émission d'un flash de lumière (18) distinct, résultant en ce que l'équation soit une équation surdéterminée dont est extraite une pluralité de sous-équations à résoudre, lesdites sous-équations formant un système surdéterminé à résoudre et selon laquelle la résolution de l'équation comporte la résolution de chaque sous-équations pour obtenir une pluralité de réflectances solution et le calcul de la moyenne de la pluralité de réflectances solution pour obtenir la réflectance de l'objet (4).

10. Dispositif selon la revendication 9, dans lequel le capteur (12) et la source (10) sont disposés sur un même appareil (16).

11. Dispositif selon la revendication 9 ou 10, dans lequel la source (10) est un écran lumineux ou un ensemble de diodes électroluminescentes.

12. Dispositif selon l'une quelconque des revendications 9 à 11, dans lequel le capteur (12) est choisi dans un groupe constitué d'un appareil photo, d'une caméra, d'un imageur multicanal et d'un imageur hyperspectral.

**Patentansprüche**

1. Verfahren zur Bestimmung des Reflexionsgrades eines Objekts (4), wobei das Verfahren die folgenden Schritte umfasst:

   - Beleuchten des Objekts (4) durch eine externe Lichtquelle (6), die eine unbekannte und veränderliche Beleuchtungsstärke aufweist,
   - Aussenden mindestens eines Lichtblitzes (18), der das Objekt (4) beleuchtet, wobei jeder Lichtblitz (18) von einer Quelle (10) ausgesandt wird und eine bekannte Beleuchtungsstärke in einem Wellenlängenbereich aufweist,
   - Erfassen der von dem Objekt (4) reflektierten Welle (20), um mindestens ein Bild auf einem Sensor (12) zu erzeugen, wobei der Schritt des Auffangens zu Zeitpunkten des Aussendens des Blitzes und ohne das Aussenden des Blitzes angewandt wird,
   - Erhalten einer Gleichung mit mehreren Unbekannten, wobei die Gleichung aus den gebildeten Bildern gewonnen wird und der Reflexionsgrad des Objekts (4) und die Beleuchtungsstärke der externen Lichtquelle (6) zwei Unbekannte der Gleichung sind,
   - Lösen der Gleichung,

   wobei der Schritt des Lösens der Gleichung umfasst:

   - Berechnen von Lösungspunkten der Gleichung,
   - Interpolieren der berechneten Punkte durch eine Interpolationsfunktion, und
   - Verwenden einer ersten Näherung zum Lösen der Gleichung, wobei die erste Näherung eine Näherung ist, nach der jedes beim Aussenden eines einzelnen Lichtblitzes (18) aufgenommene Bild von dem Aussenden eines separaten Lichtblitzes abgeleitet wird, was dazu führt, dass die Gleichung eine überbestimmte Gleichung ist, aus der eine Mehrzahl von zu lösenden Untergleichungen extrahiert werden, wobei die Untergleichungen ein zu lösendes überbestimmtes System bilden, und nach der das Lösen der Gleichung das Lösen jeder Untergleichung, um eine Mehrzahl von Lösungsreflexionsgraden zu erhalten, und das Berechnen des Mittelwertes der Mehrzahl von Lösungsreflexionsgraden, um den Reflexionsgrad des Objekts (4) zu erhalten, aufweist.

2. Verfahren nach Anspruch 1, bei dem der Schritt des Lösens der Gleichung auch die Verwendung einer zweiten Näherung aufweist, nach der die Interpolationsfunktion die Stabilitätspunkte der Gleichung bestimmt und nach der die Stabilitätspunkte in dem Schritt des Lösens der Gleichung verwendet werden, wobei die Stabilitätspunkte diejenigen Punkte der Interpolationsfunktion sind, für die die Lösung weniger anfällig für Instabilitäten ist.

3. Verfahren nach Anspruch 1 oder 2, bei dem der Schritt des Lösens der Gleichung auch die Verwendung einer dritten Näherung aufweist, nach der die Beleuchtungsstärke der externen Lichtquelle (6) zum Zeitpunkt des Aussendens eines Lichtblitzes gleich der Beleuchtungsstärke der externen Lichtquelle (6) zu einem früheren Zeitpunkt ist, wobei die dritte Näherung in dem Schritt des Lösens der Gleichung verwendet wird, wobei das Verfahren einen Schritt des Aufnehmens eines Referenzbildes durch Erfassen der von dem Objekt (4) reflektierten Welle (20) umfasst, um mindestens ein Bild auf einem Sensor (12) in Abwesenheit eines von der Quelle ausgesandten Blitzes (18) zu bilden, wobei der Schritt des Lösens der Gleichung eine Subtraktionsoperation einer Referenzgleichung umfasst, um eine vereinfachte Gleichung zu erhalten, wobei die Referenzgleichung aus dem Referenzbild erhalten wird.

4. Verfahren nach einem beliebigen der Ansprüche 1 bis 3, wobei die Quelle (10) und der Sensor (12) an einem selben Gerät (16) angeordnet sind.

5. Verfahren nach einem beliebigen der Ansprüche 1 bis 4, bei dem eine Mehrzahl von Lichtblitzen (18) ausgesandt werden, wobei jeder Lichtblitz (18) eine maximale Beleuchtungsstärke in der Wellenlänge aufweist, wobei der Erfassungsschritt für jeden ausgesandten Lichtblitz (18) durchgeführt wird und mindestens zwei Lichtblitze (18) eine maximale Beleuchtungsstärke im Abstand von mindestens 20 Nanometern aufweisen.

6. Verfahren nach Anspruch 2 oder einem beliebigen der Ansprüche 3 bis 5, wenn sie von Anspruch 2 abhängen, bei dem die zweite Näherung im Schritt des Lösens der Gleichung verwendet wird und bei dem die Interpolationsfunktion eine gewichtete Kombination von Basisfunktionen ist, die durch eine endliche Anzahl von Stützpunkten, insbesondere kubischen Splines, abgeschlossen sind, wobei jeder Stützpunkt ein Stabilitätspunkt der Gleichung ist.

7. Verfahren nach Anspruch 6, bei dem eine Mehrzahl von Lichtblitzen (18) ausgesandt werden, wobei jeder Lichtblitz (18) eine maximale Beleuchtungsstärke in der Wellenlänge aufweist, wobei der Erfassungsschritt für jeden ausgesandten Lichtblitz (18) durchgeführt wird und die Stützpunkte mindestens die folgende Eigenschaft erfüllen:

 - die Anzahl der Stützpunkte ist gleich der Anzahl der Blitze (18).

8. Verfahren nach Anspruch 3, wobei das Verfahren ferner die folgenden Schritte aufweist:

 - Schätzen eines Zeitintervalls der Veränderung der Beleuchtungsstärke der externen Lichtquelle (6),
 - aus dem geschätzten Zeitintervall der Veränderung Bestimmen der Häufigkeit, mit der der Schritt der Aufnahme eines Referenzbildes wiederholt werden muss, damit die dritte Näherung gültig bleibt.

9. Vorrichtung (1) zum Bestimmen des Reflexionsgrades eines Objekts (4), wobei das Objekt (4) von einer externen Lichtquelle (6) mit einer unbekannten und veränderlichen Beleuchtungsstärke beleuchtet wird, wobei die Vorrichtung (1) umfasst:

 - eine Quelle (10), die geeignet ist, mindestens einen Lichtblitz (18), der das Objekt (4) beleuchtet, auszusenden, wobei jeder von der Quelle (10) ausgesandte Lichtblitz (18) eine bekannte Beleuchtungsstärke in einem Wellenlängenbereich aufweist,
 - einen Sensor (12), der geeignet ist, die vom Objekt (4) reflektierte Welle (20) zu erfassen, um mindestens ein Bild zu Zeitpunkten des Aussenden des Blitzes und ohne das Aussenden des Blitzes zu bilden,
 - eine Verarbeitungseinheit (14), die geeignet ist, die folgenden Schritte auszuführen:
 - Erhalten einer Gleichung mit mehreren Unbekannten, wobei die Gleichung aus den gebildeten Bildern gewonnen wird und der Reflexionsgrad des Objekts (4) und die Beleuchtungsstärke der externen Lichtquelle (6) zwei Unbekannte der Gleichung sind,
 - Lösen der Gleichung,

wobei der Schritt des Lösens der Gleichung umfasst:

 - Berechnen von Lösungspunkten der Gleichung,
 - Interpolieren der berechneten Punkte durch eine Interpolationsfunktion, und
 - Verwenden einer ersten Näherung zum Lösen der Gleichung, wobei die erste Näherung eine Näherung ist, nach der jedes beim Aussenden eines einzelnen Lichtblitzes (18) aufgenommene Bild von dem Aussenden eines separaten Lichtblitzes (18) abgeleitet wird, was dazu führt, dass die Gleichung eine überbestimmte Gleichung ist, aus der eine Mehrzahl von zu lösenden Untergleichungen extrahiert werden, wobei die Untergleichungen ein zu lösendes überbestimmtes System bilden, und nach der das Lösen der Gleichung das Lösen jeder Untergleichung, um eine Mehrzahl von Lösungsreflexionsgraden zu erhalten, und das Berechnen des Mittelwertes der Mehrzahl von Lösungsreflexionsgraden, um den Reflexionsgrad des Objekts (4) zu erhalten, aufweist.

10. Vorrichtung nach Anspruch 9, bei der der Sensor (12) und die Quelle (10) an einem selben Gerät (16) angeordnet sind.

11. Vorrichtung nach Anspruch 9 oder 10, bei dem die Quelle (10) ein Leuchtschirm oder eine Anordnung von Leuchtdioden ist.

**12.** Vorrichtung nach einem beliebigen der Ansprüche 9 bis 11, bei der der Sensor (12) ausgewählt ist aus einer Gruppe bestehend aus einem Fotoapparat, einer Kamera, einem Mehrkanal-Bildaufnehmer und einem Hyperspektral-Bildaufnehmer.

**Claims**

**1.** A method for determining the reflectance of an object (4), the method comprising the following steps:

   - illuminating the object (4) using an outside illuminant (6) having an unknown and variable illumination,
   - emitting at least one flash of light (18) illuminating the object (4), each flash of light (18) being emitted by a source (10) and having a known illumination in a wavelength range,
   - collecting the wave (20) reflected by the object (4) to form at least one image on a sensor (12), the collecting step being applied at times of flash emitting and without flash emitting,
   - obtaining an equation with several unknowns, the equation being obtained from formed images, the reflectance of the object (4) and the illumination of the outside illuminant (6) being two unknowns of the equation,
   - solving the equation,
   the step for solving the equation comprising
   - calculating solution points of the equation,
   - interpolating points calculated by an interpolation function, and
   - using a first approximation to solve the equation, the first approximation being an approximation according to which each collected image during the emitting of a same flash of light (18) is issued from the emitting of a distinct flash of light, resulting in the equation being an over-determined equation from which can be extracted a plurality of sub-equations to solve, said sub-equations forming an over-determined system of equations and according to which solving the equation comprises solving eaxh sub-equations to obtain a plurality of solution reflectances and calculating a mean of the plurality of the reflectance solution to obtain the reflectance of the object (4).

**2.** The method according to claim 1, wherein the step of solving the equation comprises also using a second approximation according to which the interpolation function determines the stability points of the equation and according to which the stability points are used in a step of solving the equation, the stability points being the point of the interpolation function for which the solution is less sensitive to the instabilities.

**3.** The method according to claim 1 or 2, wherein the step of solving the equation also comprises using a third approximation according to which the illumination of the outside illuminant at the moment of emission of a flash of light is equal to the illumination of the outside illuminant at a preceding moment, the third approximation being used during the step of solving the equation, the method comprising taking a reference image by collecting the wave (20) reflected by the object (4) to form at least one image on a sensor (12) in absence of flash (18) emitted by the source, the step of solving the equation comprising an operation of subtracting the reference equation to obtain a simplified equation, the reference equation being obtained based on the reference image.

**4.** The method according to any one of claims 1 to 3, wherein the source (10) and the sensor (12) are positioned on a same apparatus (16).

**5.** The method according to any one of claims 1 to 4, wherein a plurality of flashes of light (18) are emitted, each flash (18) having maximum wavelength illumination, the collecting step being carried out for each flash of light (18) emitted and at least two flashes of light (18) have a maximum illumination separated by at least 20 nanometers.

**6.** The method according to claim 2 or according to any one of claims 1 to 4 when they depend from claim 2, wherein the second approximation is used during the step for solving the equation and in which the interpolation function is a weighted combination of base functions sealed by a finite number of interpolation points, in particular cubic splines, each interpolation point being a stability point of the equation.

**7.** The method according to claim 6, wherein a plurality of flashes of light (18) are emitted, each flash (18) having maximum wavelength illumination, the collecting step being carried out for each flash of light (18) emitted, and the interpolation points verify at least the following property:

   - the number of interpolation points is equal to the number of flashes (18).

8. The method according to claim 3, wherein the method further comprises the steps of:

- estimating a time interval of the variation of the illumination of the outside illuminant (6),
- from the estimated time interval of the variation, determining the frequency at which the taking of a reference image being to be reiterated so that the third approximation remains valid.

9. A device (1) for determining the reflectance of an object (4), the object (4) being illuminated by an outside illuminant (6) having an unknown and variable illumination, the device (1) comprising:

- a source (10), able to emit at least one flash of light (18) illuminating the object (4), each flash of light (18) emitted by the source (10) having a known illumination in a wavelength range,
- a sensor (12), able to collect the wave (20) reflected by the object (4) to form at least one image at times of flash emitting and without flash emitting,
- a processing unit (14), able to carry out the following steps:

○ obtaining an equation with several unknowns, the equation being obtained from formed images, the reflectance of the object (4) and the illumination of the outside illuminant (6) being two unknowns of the equation,
○ solving the equation,

the step for solving the equation comprising:

- calculating solution points of the equation,
- interpolating points calculated by an interpolation function, and
○ using a first approximation to solve the equation, the first approximation being an approximation according to which each collected image during the emitting of a same flash of light (18) is issued from the emitting of a distinct flash of light, resulting in the equation being an over-determined equation from which can be extracted a plurality of sub-equations to solve, said sub-equations forming an over-determined system of equations and according to which solving the equation comprises solving eaxh sub-equations to obtain a plurality of solution reflectances and calculating a mean of the plurality of the reflectance solution to obtain the reflectance of the object (4).

10. The device according to claim 9, wherein the sensor (12) and the source (10) are positioned on a same apparatus (16).

11. The device according to claim 9 or 10, wherein the source (10) is a light screen or a set of light-emitting diodes.

12. The device according to any one of claims 9 to 11, wherein the sensor (12) is chosen from a group made up of a photo apparatus, a camera, a multichannel imager and a hyperspectral imager.

## FIG.1

## FIG.2

FIG.3

FIG.4

FIG.5

FIG.6

FIG.7

## FIG.8

## FIG.9

-100-

-102-

-104-

-106-

-150- | 108

-152-

-154-

-180-

FIG.10

**EP 3 356 800 B1**

## RÉFÉRENCES CITÉES DANS LA DESCRIPTION

**Documents brevets cités dans la description**

- WO 2013120956 A1